# EUROPEAN PATENT APPLICATION

(11) **EP 3 190 773 A1**
(43) Date of publication of application: **12.07.2017**
(21) Application number: 14903021.5
(22) Date of filing: 30.09.2014
(51) Int. Cl.: H04L 29/08

(54) **DATA PACKET PROCESSING APPARATUS AND METHOD**

(71) Applicant: Huawei Technologies Co., Ltd., Longgang District Shenzhen, Guangdong 518129 (CN)
(72) Inventor: LU, Wei, Shenzhen Guangdong 518129 (CN); ZHOU, Han, Shenzhen Guangdong 518129 (CN); QIAN, Tao, Shenzhen Guangdong 518129 (CN)
(74) Representative: Epping - Hermann - Fischer
(86) International application number: PCT/CN2014/088055
(87) International publication number: WO 2016/049926

(57) **Abstract**

The present invention relates to the field of communications technologies, and in particular, to a data packet processing apparatus and method, to resolve a problem that load on instances in a same value-added-service VAS type is uneven. A data packet processing apparatus provided in an embodiment of the present invention is located in a value-added-service processing network. A transceiver module of the data packet processing apparatus receives a first data packet; a processing module determines, according to a load status of each VAS instance corresponding to each value-added-service VAS type in a service chain that the first data packet is to go through, a service path that the first data packet is to go through; the transceiver module sends the first data packet carrying a service path identifier to a data packet routing apparatus in the network, to instruct the data packet routing apparatus to route the first data packet according to the service path identified by the service path identifier. The service path is determined according to the load status of each VAS instance. Therefore, when the first data packet is routed, load on each VAS instance is considered, avoiding that load on devices in a same VAS type is uneven.

## Description

### TECHNICAL FIELD

The present invention relates to the field of communications technologies, and in particular, to a data packet processing apparatus and method.

### BACKGROUND

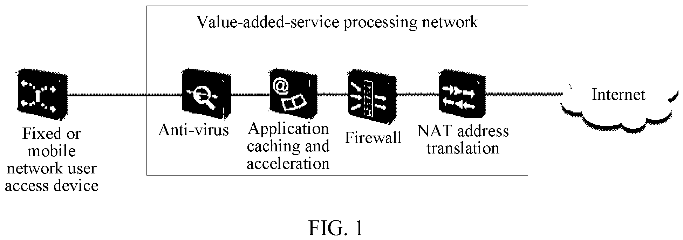

In the fixed or mobile broadband access field and data center applications, there are much value-added-service processing based on layer 4 to layer 7, including anti-virus, firewall, application caching and acceleration, NAT address translation, and the like. Generally, as shown in FIG. 1, value-added-service processing devices providing functions of the foregoing value-added-service processing are connected in series behind a fixed or mobile user access device, and a network including these value-added-service processing devices and a related switch and control device is referred to as a "value-added-service processing network".

In an actual application, some service flows of users may need NAT address translation, and only a service flow for a video or a Web access needs application caching and acceleration. However, in the network architecture shown in FIG. 1, all service flows need to flow through the multiple value-added-service processing devices connected in series, regardless of whether these service flows need the corresponding value-added-service processing. This manner has a high requirement for processing capacities of the value-added-service processing devices, resulting in unnecessary network device investment. In addition, this manner also increases fault sources in the network, where when a value-added-service processing device encounters a fault, an interruption and a failure of an entire service flow are caused.

To resolve the foregoing problem, a concept of "service chain" is proposed in the industry. A service chain is a sequence of value added services that a service flow needs to flow through and an order of flowing through the sequence of value added services. For example, (anti-virus, firewall, NAT address translation), (application caching and acceleration, firewall, NAT address translation), and (firewall, NAT address translation) are respectively different service chains, and service flows of different service chains only need to flow through corresponding service nodes (that is, value-added-service processing devices).

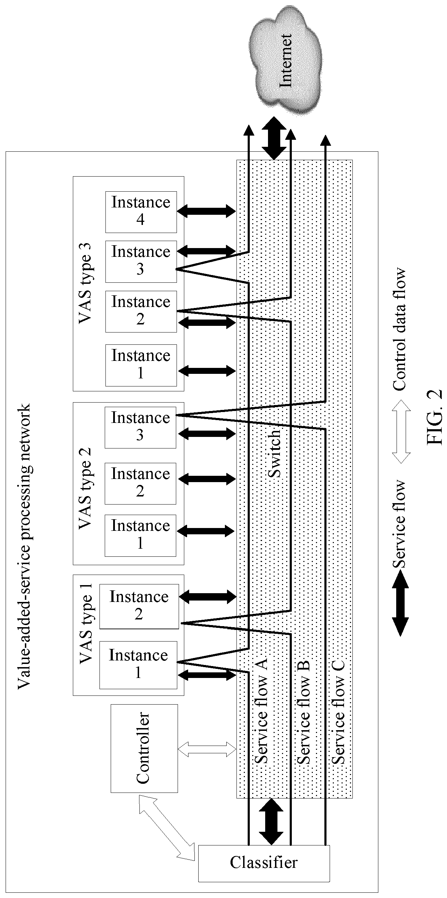

A typical value-added-service processing network utilizing the service chain technology is shown in FIG. 2, including: a controller such as a software defined networking (Software Defined Network, SDN) controller, a classifier, a switch (which may include one or more switches), value-added-service (Value Added Service, VAS) processors, and the like, where the value-added-service processors are the value-added-service processing devices mentioned above. Each type of VAS processor includes one or more VAS instances: an instance 1 to an instance N, where N is a positive integer. In an actual service flow transmission process, a same service chain corresponds to multiple service paths.

For example, a service chain is a VAS type 1 + a VAS type 2 + a VAS type 3, but an actual service path includes, but is not limited to, the following several paths:
the VAS type 1-an instance 1 + the VAS type 2-an instance 2 + the VAS type 3-an instance 1;
the VAS type 1-an instance 2 + the VAS type 2-an instance 1 + the VAS type 3-the instance 1; and
the VAS type 1-the instance 1 + the VAS type 2-the instance 2 + the VAS type 3-an instance 3.

Currently, when a service path is determined, a commonly used method is randomly selecting an instance in a VAS type. Such a method may cause that load on an instance is heavier, load on another instance is lighter, and load on instances is uneven.

### SUMMARY

Embodiments of the present invention provide a data packet processing apparatus and method, to resolve a problem that load on instances in a same VAS type is uneven when a service path is determined.

According to a first aspect, an embodiment of the present invention provides a data packet processing apparatus, where the data packet processing apparatus is located in a value-added-service processing network, and includes:
a transceiver module, configured to receive a first data packet; and
a processing module, configured to determine, according to a load status of each VAS instance corresponding to each value-added-service VAS type in a service chain that is in the value-added-service processing network and that the first data packet is to go through, a service path that the first data packet is to go through, where the service path includes each VAS type sequentially included in the service chain and a VAS instance that corresponds to each VAS type and that the first data packet is to go through, where
the transceiver module is further configured to: place, in the first data packet, a service path identifier for identifying the service path, and send the first data packet carrying the service path identifier to a data packet routing apparatus in the value-added-service processing network, to instruct the data packet routing apparatus to route the first data packet according to the service path identified by the service path identifier.

With reference to the first aspect, in a first possible implementation manner, the processing module is specifically configured to:
determine the service path according to the load status, and a status of each VAS instance corresponding to each VAS type in the service chain.

With reference to the first aspect, in a second possible implementation manner, the processing module is specifically configured to:
determine the service path according to the load status and a user identifier of a user to which the first data packet belongs and based on a rule that a same VAS instance is selected when data packets of a same service flow of a same user go through a same VAS type.

With reference to the first aspect, in a third possible implementation manner, the first data packet comes from a classifier in the value-added-service processing network, and the first data packet includes service chain information of the service chain that the first data packet is to go through; and
the processing module is further configured to determine, according to the service chain information obtained from the first data packet, the service chain that the first data packet is to go through.

With reference to the first aspect, the first possible implementation manner of the first aspect, the second possible implementation manner of the first aspect, or the third possible implementation manner of the first aspect, in a fourth possible implementation manner, the first data packet is the first packet of a service flow to which the first data packet belongs;
the processing module is further configured to: after determining the service path, record a correspondence between a service flow identifier of the service flow to which the first data packet belongs and the service path identifier; and
the transceiver module is further configured to:
after the processing module determines the service path, receive a second data packet, where the second data packet is a non-first packet of the service flow to which the first data packet belongs; and
place, in the second data packet, the service path identifier in the recorded correspondence, and send the second data packet carrying the service path identifier to the data packet routing apparatus, to instruct the data packet routing apparatus to route the second data packet according to the service path identified by the service path identifier.

According to a second aspect, an embodiment of the present invention provides a data packet routing apparatus, where the data packet routing apparatus is located in a value-added-service processing network, and includes:
a transceiver module, configured to receive a first data packet sent by a data packet processing apparatus in the value-added-service processing network; and
a processing module, configured to: obtain, from the first data packet, a service path identifier of a service path that the first data packet is to go through, and route the first data packet according to the service path identified by the obtained service path identifier, where
the service path includes each VAS type that is in the value-added-service processing network and that is sequentially included in the service chain that the first data packet is to go through, and a VAS instance that corresponds to each VAS type and that the first data packet is to go through.

According to a third aspect, an embodiment of the present invention provides a classifier, where the classifier is located in a value-added-service processing network, and includes:
a processing module, configured to determine service chain information of a service chain that is in the value-added-service processing network and that a first data packet is to go through; and
a sending module, configured to: place the service chain information in the first data packet, and send the first data packet to a data packet processing apparatus in the value-added-service processing network, to instruct the data packet processing apparatus to determine, according to the service chain information, the service chain that the first data packet is to go through.

According to a fourth aspect, an embodiment of the present invention provides a data packet processing method, including:
receiving, by a data packet processing apparatus in a value-added-service processing network, a first data packet;
determining, by the data packet processing apparatus according to a load status of each VAS instance corresponding to each value-added-service VAS type in a service chain that is in the value-added-service processing network and that the first data packet is to go through, a service path that the first data packet is to go through, where the service path includes each VAS type sequentially included in the service chain and a VAS instance that corresponds to each VAS type and that the first data packet is to go through; and
placing, in the first data packet by the data packet processing apparatus, a service path identifier for identifying the service path, and sending the first data packet carrying the service path identifier to a data packet routing apparatus in the value-added-service processing network, to instruct the data packet routing apparatus to route the first data packet according to the service path identified by the service path identifier.

With reference to the fourth aspect, in a first possible implementation manner, the determining, by the data packet processing apparatus, a service path used for transmitting the first data packet includes:
determining, by the data packet processing apparatus, the service path according to the load status, and a status of each VAS instance corresponding to each VAS type in the service chain.

With reference to the fourth aspect, in a second possible implementation manner, the determining, by the data packet processing apparatus, a service path used for transmitting the first data packet includes:
determining, by the data packet processing apparatus, the service path according to the load status and a user identifier of a user to which the first data packet belongs and based on a rule that a same VAS instance is selected when data packets of a same service flow of a same user go through a same VAS type.

With reference to the fourth aspect, in a third possible implementation manner, the first data packet comes from a classifier in the value-added-service processing network, and the first data packet includes service chain information of the service chain that the first data packet is to go through; and
after the receiving, by a data packet processing apparatus, a first data packet, and before the determining a service path that the first data packet is to go through, the method further includes: determining, by the data packet processing apparatus according to the service chain information obtained from the first data packet, the service chain that the first data packet is to go through.

With reference to the third possible implementation manner of the fourth aspect, in a fourth possible implementation manner, before the receiving, by a data packet processing apparatus, a first data packet, the method further includes:
determining, by the classifier, the service chain information of the service chain that is in the value-added-service processing network and that the first data packet is to go through; and
placing, by the classifier, the service chain information in the first data packet, and sending the first data packet to the data packet processing apparatus, to instruct the data packet processing apparatus to determine, according to the service chain information, the service chain that the first data packet is to go through.

With reference to the fourth aspect, the first possible implementation manner of the fourth aspect, the second possible implementation manner of the fourth aspect, the third possible implementation manner of the fourth aspect, or the fourth possible implementation manner of the fourth aspect, in a fifth possible implementation manner, the first data packet is the first packet of a service flow to which the first data packet belongs;
after the determining, by the data packet processing apparatus, a service path, the method further includes: recording, by the data packet processing apparatus, a correspondence between a service flow identifier of the service flow to which the first data packet belongs and the service path identifier;
receiving, by the data packet processing apparatus, a second data packet, where the second data packet is a non-first packet of the service flow to which the first data packet belongs; and
placing, in the second data packet by the data packet processing apparatus, the service path identifier in the recorded correspondence, and sending the second data packet carrying the service path identifier to the data packet routing apparatus, to instruct the data packet routing apparatus to route the second data packet according to the service path identified by the service path identifier.

According to a fifth aspect, an embodiment of the present invention provides a data packet routing method, including:
receiving, by a data packet routing apparatus in a value-added-service processing network, a first data packet sent by a data packet processing apparatus in the value-added-service processing network;
obtaining, by the data packet routing apparatus from the first data packet, a service path identifier of a service path that the first data packet is to go through; and
routing, by the data packet routing apparatus, the first data packet according to the service path identified by the obtained service path identifier, where
the service path includes each VAS type sequentially included in a service chain that is in the value-added-service processing network and that the first data packet is to go through, and a VAS instance that corresponds to each VAS type and that the first data packet is to go through.

According to a sixth aspect, an embodiment of the present invention provides an information sending method, including:
determining, by a classifier in a value-added-service processing network, service chain information of a service chain that is in the value-added-service processing network and that a first data packet is to go through; and
placing, by the classifier, the service chain information in the first data packet, and sending the first data packet to a data packet processing apparatus in the value-added-service processing network, to instruct the data packet processing apparatus to determine, according to the service chain information, the service chain that the first data packet is to go through.

In the embodiments of the present invention, the data packet processing apparatus in a value-added-service processing network determines, according to a load status of each VAS instance corresponding to each value-added-service VAS type in a service chain, a service path that a received first data packet is to go through, and sends a service path identifier for identifying the service path to the data packet routing apparatus in the value-added-service processing network, and the data packet routing apparatus routes the first data packet according to the service path. The service path is determined according to the load status of each VAS instance. Therefore, when the first data packet is routed, load on each VAS instance is considered, avoiding that load on devices in a same VAS type is uneven.

In addition, the data packet processing apparatus provided in the embodiments of the present invention places the identifier of the service path in the first data packet, and sends the first data packet to the data packet routing apparatus. This provides a method for passing on routing control information by using a data packet, and no dedicated control device is needed in the network to route a data packet.

In another aspect, in the embodiments of the present invention, the classifier in the value-added-service processing network determines service chain information of a service chain that is in the value-added-service processing network and that the first data packet is to go through, places the service chain information in the first data packet, and sends the first data packet to the data packet processing apparatus. In this way, the data packet processing apparatus may obtain the service chain information from the first data packet, determine, according to the service chain information, the service chain that the first data packet is to go through, and then further determine, according to the load status of each VAS instance corresponding to each VAS type in the service chain, the service path that the first data packet is to go through. In this way, it is avoided that load on devices in a same VAS type is uneven.

### BRIEF DESCRIPTION OF DRAWINGS

FIG. 1 is an architectural diagram of a value-added-service processing network;
FIG. 2 is an architectural diagram of a value-added-service processing network utilizing a service chain technology;
FIG. 3 is a schematic structural diagram of a value-added-service processing network according to an embodiment of the present invention;
FIG. 4 is a flowchart of Embodiment 1 of the present invention;
FIG. 5 is a schematic structural diagram of a first data packet processing apparatus according to an embodiment of the present invention;
FIG. 6 is a schematic structural diagram of a second data packet processing apparatus according to an embodiment of the present invention;
FIG. 7 is a schematic structural diagram of a first data packet routing apparatus according to an embodiment of the present invention;
FIG. 8 is a schematic structural diagram of a second data packet routing apparatus according to an embodiment of the present invention;
FIG. 9 is a schematic structural diagram of a first classifier according to an embodiment of the present invention;
FIG. 10 is a schematic structural diagram of a second classifier according to an embodiment of the present invention;
FIG. 11 is a flowchart of a data packet processing method according to an embodiment of the present invention;
FIG. 12 is a flowchart of a data packet routing method according to an embodiment of the present invention; and
FIG. 13 is a flowchart of an information sending method according to an embodiment of the present invention.

### DESCRIPTION OF EMBODIMENTS

Embodiments of the present invention provide a data packet processing apparatus and method, to resolve a problem that load on devices in a same VAS type is uneven when a service path is determined.

The data packet processing apparatus provided in the embodiments of the present invention is located in a value-added-service processing network. A transceiver module of the data packet processing apparatus is configured to receive a first data packet. A processing module of the data packet processing apparatus is configured to determine, according to a load status of each VAS instance corresponding to each value-added-service VAS type in a service chain that is in the value-added-service processing network and that the first data packet is to go through, a service path that the first data packet is to go through. The transceiver module is further configured to: place, in the first data packet, a service path identifier for identifying the service path, and send the first data packet carrying the service path identifier to a data packet routing apparatus in the value-added-service processing network, to instruct the data packet routing apparatus to route the first data packet according to the service path identified by the service path identifier.

The data packet processing apparatus determines, according to the load status of each VAS instance corresponding to each value-added-service VAS type in the service chain, the service path that the first data packet is to go through, and sends the service path identifier for identifying the service path to the data packet routing apparatus in the value-added-service processing network, to instruct the data packet routing apparatus to route the first data packet according to the service path. The service path is determined according to the load status of each VAS instance. Therefore, when the first data packet is routed, load on each VAS instance is considered, avoiding that load on devices in a same VAS type is uneven.

The following describes the embodiments of the present invention in detail with reference to accompanying drawings.

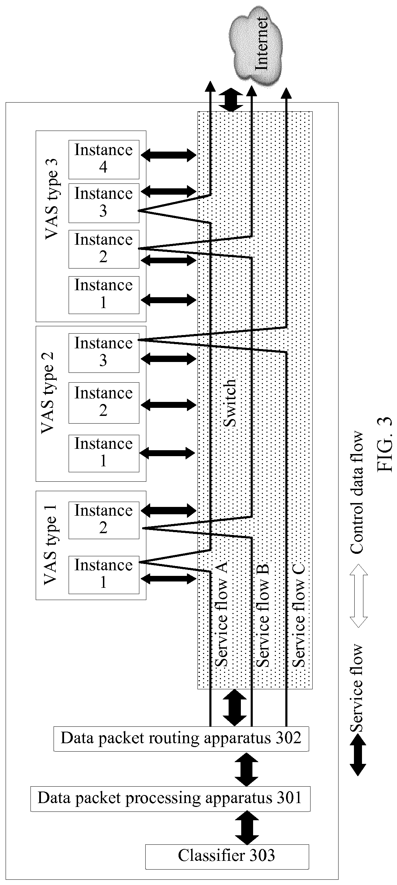

First a value-added-service processing network provided in the embodiments of the present invention is described, and then a data packet processing apparatus, a data packet routing apparatus, and a classifier in the value-added-service processing network are separately described. Finally, a data packet processing method, a data packet routing method, and an information sending method provided in the embodiments of the present invention are described. FIG. 3 shows a value-added-service processing network provided in an embodiment of the present invention. As shown in FIG. 3, the network includes: a data packet processing apparatus 301, a data packet routing apparatus 302, a classifier 303, a switch, and several VAS processors. Each VAS processor processes one type of value added service, and one VAS processor includes one or more VAS instances.

The classifier 303 is configured to: determine service chain information of a service chain that is in the value-added-service processing network and that a first data packet is to go through, and place the service chain information in the first data packet and send the first data packet to the data packet processing apparatus 301.

The data packet processing apparatus 301 is configured to: receive the first data packet sent by the classifier 303; determine, according to the service chain information in the first data packet, the service chain that is in the value-added-service processing network and that the first data packet is to go through; determine, according to a load status of each VAS instance corresponding to each VAS type in the service chain, a service path that the first data packet is to go through; and place, in the first data packet, a service path identifier for identifying the service path, and send the first data packet carrying the service path identifier to the data packet routing apparatus 302.

The data packet routing apparatus 302 is configured to: receive the first data packet sent by the data packet processing apparatus 301, obtain, from the first data packet, the service path identifier of the service path that the first data packet is to go through, and route the first data packet according to the service path identified by the obtained service path identifier.

The service path includes each VAS type that is in the value-added-service processing network and that is sequentially included in the service chain that the first data packet is to go through, and a VAS instance that corresponds to each VAS type and that the first data packet is to go through.

The switch in FIG. 3 may include one or more switches. The classifier 303 may be a policy and charging enforcement function (Policy and Charging Enforcement Function, PCEF) unit, a packet data network gateway (Packet Data Network Gateway, PGW), or a traffic detection function (Traffic detection function, TDF).

The data packet processing apparatus 301 and the data packet routing apparatus 302 may be located in a same device or different devices, for example, located in a same switch. Optionally, network topology information of the value-added-service processing network is pre-configured on the data packet processing apparatus 301 and the data packet routing apparatus 302, and includes, but is not limited to, switches included in the value-added-service processing network, an address and a port number of each switch, a VAS type connected to each switch, and an address and a port number of each VAS instance in each VAS type. Optionally, service chain information of each service chain in the value-added-service processing network is further pre-configured on the data packet processing apparatus 301. For example, a service chain A in FIG. 3 goes through a VAS of type 1 and a VAS of type 3.

After receiving a first data packet, the data packet processing apparatus 301 may obtain service chain information from the first data packet, and determine, according to the service chain information, a service chain that the first data packet is to go through. Because the network topology information of the value-added-service processing network is pre-configured on the data packet processing apparatus 301, the data packet processing apparatus 301 may obtain a load status, status information, and the like of each VAS instance corresponding to each VAS type in the service chain. The data packet processing apparatus 301 may determine, according to the obtained load status and/or the obtained status information of each VAS instance corresponding to each VAS type in the service chain, a VAS instance that the first data packet is specifically to go through when the first data packet is transmitted in the value-added-service processing network.

For example, assuming that the first data packet goes through the service chain A in the value-added-service processing network, after receiving the first data packet sent by the classifier 303, the data packet processing apparatus 301 first obtains the service chain information in the first data packet, and determines, according to the service chain information, that the first data packet goes through the service chain A. The data packet processing apparatus 301 obtains load statuses of VAS instances in the VAS type 1 and load statuses of VAS instances in the VAS type 3 in the service chain A. If load on an instance 1 in the VAS type 1 is lighter than load on an instance 2, and an instance 2 in the VAS type 3 is an instance having lightest load among four instances, the data packet processing apparatus 301 determines that a service path that the first data packet goes through is:
the VAS type 1-the instance 1 + the VAS type 3-the instance 2.

For another example, the data packet processing apparatus 301 obtains status information of the VAS instances in the VAS type 1 and status information of the VAS instances in the VAS type 3 in the service chain A. If status information of the instance 1 in the VAS type 1 indicates that the instance 1 is available, and status information of the instance 2 indicates that the instance 2 is unavailable, and the four instances in the VAS type 3 are all available, but the instance 2 is an instance having lightest load among the four instances, the data packet processing apparatus 301 determines that the service path that the first data packet goes through is still:
the VAS type 1-the instance 1 + the VAS type 3-the instance 2.

The data packet processing apparatus 301 places, in the first data packet, a service path identifier for identifying the foregoing service path, and sends the first data packet to the data packet routing apparatus 302.

For example, information about all possible service paths may be pre-configured on the data packet processing apparatus 301 and the data packet routing apparatus 302, and all the possible service paths may be numbered. For example:
P1: the VAS type 1-the instance 1 + the VAS type 3-an instance 1;
P2: the VAS type 1-the instance 1 + the VAS type 3-the instance 2;
P3: the VAS type 1-the instance 1 + the VAS type 3-an instance 3;
P4: the VAS type 1-the instance 1 + the VAS type 3-an instance 4;
P5: the VAS type 1-the instance 2 + the VAS type 3-the instance 1; and
...

When the data packet processing apparatus 301 sends the service path identifier P2 to the data packet routing apparatus 302, the data packet routing apparatus 302 may determine, according to P2, that a corresponding service path is the VAS type 1-the instance 1 + the VAS type 3-the instance 2.

For another example, an identifier of a service path is a character string, for example, "1-1:3-2" representing the service path: the VAS type 1-the instance 1 + the VAS type 3-the instance 2. Many implementation manners exist for an identifier of a service path, provided that a service path is uniquely identified, and therefore are not enumerated herein.

After determining the service path, the data packet routing apparatus 302 may route the first data packet from the data packet processing apparatus 301 according to the service path. For example, for the above service path: the VAS type 1-the instance 1 + the VAS type 3-the instance 2, first the first data packet is sent, by using the switch, to the instance 1 in the VAS type 1 for processing, and then is sent to the instance 2 in the VAS type 3 for processing.

Optionally, the data packet processing apparatus 301 may also determine the service path of the first data packet according to the load status of each VAS instance corresponding to each VAS type in the service chain and a user identifier of a user to which the first data packet belongs and based on a rule that a same VAS instance is selected when data packets of a same service flow of a same user go through a same VAS type.

For example, the first data packet belongs to a service flow 1 of a user M, and before receiving the first data packet, the data packet processing apparatus 301 also receives another data packet of the service flow 1 of the user M. If the data packet processing apparatus 301 determines that a service path of the another data packet is the VAS type 1-the instance 1 + the VAS type 3-the instance 3, based on the rule that a same VAS instance is selected when data packets of a same service flow of a same user go through a same VAS type, when determining the service path of the first data packet, the data packet processing apparatus 301 still selects the service path: the VAS type 1-the instance 1 + the VAS type 3-the instance 3.

Optionally, when obtaining the load status and the status information of each VAS instance corresponding to each VAS type in the service chain, the data packet processing apparatus 301 may periodically obtain the load status and the status information, and after receiving the first data packet, determine the service path according to latest obtained load status and/or status information; or
the data packet processing apparatus 301 may obtain the load status and the status information of each VAS instance corresponding to each VAS type in the service chain after receiving the first data packet, and determine the service path according to the obtained load status and/or the obtained status information.

Optionally, the first data packet is the first packet of a service flow to which the first data packet belongs, and after determining the service path that the first data packet goes through, the data packet processing apparatus 301 records a correspondence between a service flow identifier of the service flow to which the first data packet belongs and the service path identifier of the service path.

The identifier of the service flow may be a quintuple of the service flow or an identifier of an application corresponding to the service flow. The quintuple includes: a source IP address, a destination IP address, a protocol number, a source port number, and a destination port number. The data packet processing apparatus 301 receives a second data packet. If the second data packet is a non-first packet of the service flow to which the first data packet belongs, the data packet processing apparatus 301 no longer determines a service path for the second data packet again, but directly places, in the second data packet, the service path identifier of the service path that the first data packet goes through and that is determined when the first data packet is processed, and sends the second data packet carrying the service path identifier to the data packet routing apparatus 302. The data packet routing apparatus routes the second data packet according to the service path identified by the service path identifier. That is, different data packets belonging to a same service flow are routed according to a same service path, alleviating processing load of the data packet processing apparatus 301.

A process in which a data packet is processed by the classifier 303, the data packet processing apparatus 301, and the data packet routing apparatus 302 in the value-added-service processing network provided in this embodiment of the present invention is described below by using a specific Embodiment 1.

### Embodiment 1

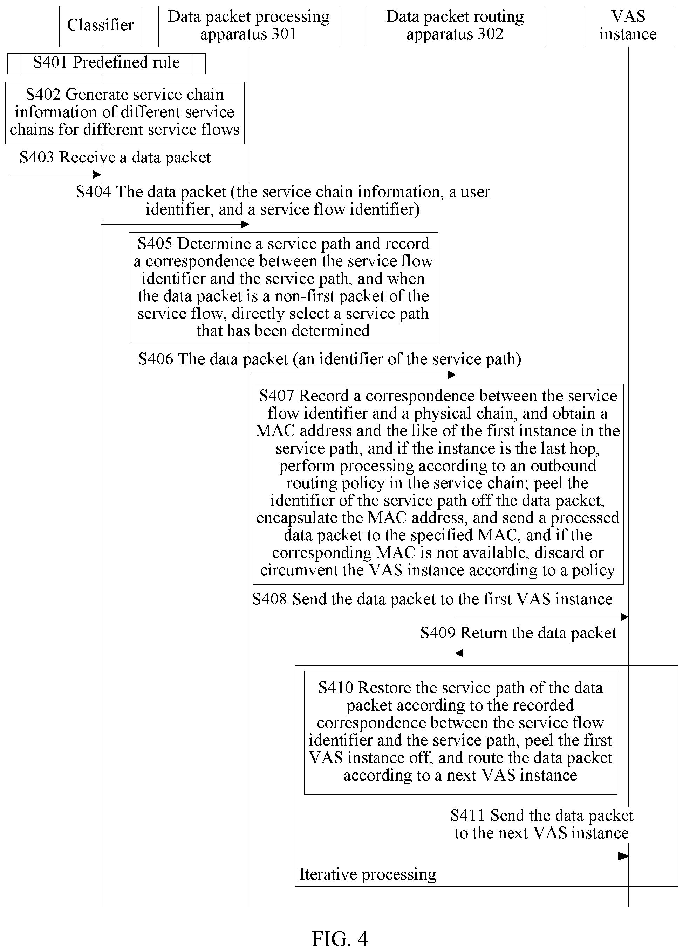

As shown in FIG. 4, Embodiment 1 includes the following steps.

S401: The classifier 303 configures a predefined policy rule, or receives a policy rule from another logical function, for example, a policy rule from a policy and charging rules function (Policy and Charging Rules Function, PCRF) unit; or the classifier further receives a policy rule delivered by the PCRF unit. That is, the classifier generates a service chain according to the predefined policy rule and the policy rule that is delivered by the PCRF unit.

S402: Generate service chain information of different service chains for different service flows according to the policy rule (the predefined policy rule and/or the policy rule that is delivered by the PCRF unit) in step S401.

S403: Receive a data packet.

S404: The classifier 303 places the service chain information in the data packet, and sends the data packet to the data packet processing apparatus 301. Optionally, the data packet may further include a user identifier and/or a service flow identifier, and the like.

S405: The data packet processing apparatus 301 determines, according to the service chain information in the data packet and according to a requirement that a same service flow of a same user needs to flow through a same VAS instance and according to a policy of load balancing among VAS instances and the like, a VAS instance in each VAS type in a service chain that the data packet goes through, to determine a service path that the data packet goes through; and records a correspondence between a service flow identifier of a service flow and the service path, for example, records a correspondence between a quintuple of the service flow and the service path, and when the data packet is a non-first packet of the service flow, directly selects a service path that is previously determined for another data packet in the service flow.

S406: The data packet processing apparatus 301 sends the data packet to the data packet routing apparatus 302, where the data packet includes a service path identifier of the service path determined for the data packet.

S407: The data packet routing apparatus 302 records a correspondence between the service flow identifier and a physical chain, determines the first VAS instance in the service path identified by the service path identifier in the data packet, obtains a MAC address and the like of the instance, and if the instance is the last hop, performs processing according to an outbound routing policy configured in the service chain, for example, directly sends the data packet to the Internet (Internet).

The data packet routing apparatus 302 extracts the service path identifier off the data packet, encapsulates the MAC address, and sends a processed data packet to a specified VAS instance.

S408: The data packet routing apparatus 302 sends the data packet to the first VAS instance.

S409: After processing the data packet, the first instance returns the data packet to the data packet routing apparatus 302.

S410: The data packet routing apparatus 302 routes the data packet according to the recorded correspondence between the service flow identifier and the service path.

S411: The data packet routing apparatus 302 sends the data packet to a next VAS instance in the service path.

If the next VAS instance does not belong to a current value-added-service processing network, the data packet routing apparatus 302 sends the data packet to the data packet processing apparatus 301; the data packet processing apparatus 301 determines, according to the next-hop VAS instance, a data packet processing apparatus 301 in another value-added-service processing network for the next hop of the data packet, and then routes the data packet to the data packet processing apparatus 301 in the another value-added-service processing network for the data packet processing apparatus 301 to repeatedly perform the steps in this embodiment.

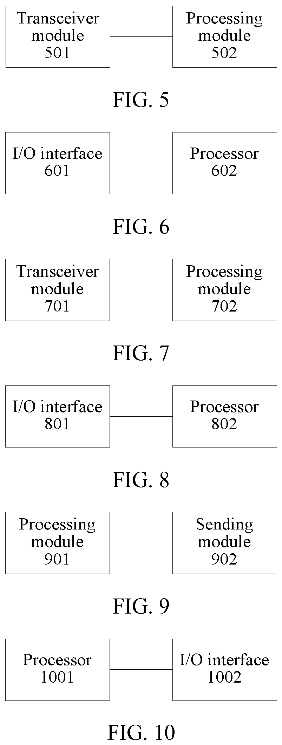

The value-added-service processing network provided in this embodiment of the present invention is described above. Based on a same inventive concept as that of the value-added-service processing network, embodiments of the present invention further provide a data packet processing apparatus, a data packet routing apparatus, and a classifier, and a data packet processing method, a data packet routing method, and an information sending method. Rules of resolving problems of these apparatuses and methods are similar to that of the value-added-service processing network. For implementation of the apparatuses and the methods, refer to the value-added-service processing network, and repeated details are not described again. FIG. 5 is a schematic structural diagram of a first data packet processing apparatus according to an embodiment of the present invention. The apparatus is located in a value-added-service processing network, and includes:
a transceiver module 501, configured to receive a first data packet; and
a processing module 502, configured to determine, according to a load status of each VAS instance corresponding to each value-added-service VAS type in a service chain that is in the value-added-service processing network and that the first data packet is to go through, a service path that the first data packet is to go through, where the service path includes each VAS type sequentially included in the service chain and a VAS instance that corresponds to each VAS type and that the first data packet is to go through, where
the transceiver module 501 is further configured to: place, in the first data packet, a service path identifier for identifying the service path, and send the first data packet carrying the service path identifier to a data packet routing apparatus in the value-added-service processing network, to instruct the data packet routing apparatus to route the first data packet according to the service path identified by the service path identifier.

Optionally, the processing module 502 is specifically configured to:
determine the service path according to the load status, and a status of each VAS instance corresponding to each VAS type in the service chain.

Optionally, the processing module 502 is specifically configured to:
determine the service path according to the load status and a user identifier of a user to which the first data packet belongs and based on a rule that a same VAS instance is selected when data packets of a same service flow of a same user go through a same VAS type. Optionally, the first data packet comes from a classifier in the value-added-service processing network, and the first data packet includes service chain information of the service chain that the first data packet is to go through; and
the processing module 502 is further configured to determine, according to the service chain information obtained from the first data packet, the service chain that the first data packet is to go through.

Optionally, the first data packet is the first packet of a service flow to which the first data packet belongs;
the processing module 502 is further configured to: after determining the service path, record a correspondence between a service flow identifier of the service flow to which the first data packet belongs and the service path identifier; and
the transceiver module 501 is further configured to:
after the processing module 502 determines the service path, receive a second data packet, where the second data packet is a non-first packet of the service flow to which the first data packet belongs; and
place, in the second data packet, the service path identifier in the recorded correspondence, and send the second data packet carrying the service path identifier to the data packet routing apparatus, to instruct the data packet routing apparatus to route the second data packet according to the service path identified by the service path identifier.
FIG. 6 is a schematic structural diagram of a second data packet processing apparatus according to an embodiment of the present invention. The apparatus is located in a value-added-service processing network, and includes:
   an input/output interface 601, configured to receive a first data packet; and
   a processor 602, configured to determine, according to a load status of each VAS instance corresponding to each value-added-service VAS type in a service chain that is in the value-added-service processing network and that the first data packet is to go through, a service path that the first data packet is to go through, where the service path includes each VAS type sequentially included in the service chain and a VAS instance that corresponds to each VAS type and that the first data packet is to go through, where
   the input/output interface 601 is further configured to: place, in the first data packet, a service path identifier for identifying the service path, and send the first data packet carrying the service path identifier to a data packet routing apparatus in the value-added-service processing network, to instruct the data packet routing apparatus to route the first data packet according to the service path identified by the service path identifier.

Optionally, the processor 602 is specifically configured to:
determine the service path according to the load status, and a status of each VAS instance corresponding to each VAS type in the service chain.

Optionally, the processor 602 is specifically configured to:
determine the service path according to the load status and a user identifier of a user to which the first data packet belongs and based on a rule that a same VAS instance is selected when data packets of a same service flow of a same user go through a same VAS type. Optionally, the first data packet comes from a classifier in the value-added-service processing network, and the first data packet includes service chain information of the service chain that the first data packet is to go through; and
the processor 602 is further configured to determine, according to the service chain information obtained from the first data packet, the service chain that the first data packet is to go through.

Optionally, the first data packet is the first packet of a service flow to which the first data packet belongs;
the processor 602 is further configured to: after determining the service path, record a correspondence between a service flow identifier of the service flow to which the first data packet belongs and the service path identifier; and
the input/output interface 601 is further configured to:
after the processor 602 determines the service path, receive a second data packet, where the second data packet is a non-first packet of the service flow to which the first data packet belongs; and
place, in the second data packet, the service path identifier in the recorded correspondence, and send the second data packet carrying the service path identifier to the data packet routing apparatus, to instruct the data packet routing apparatus to route the second data packet according to the service path identified by the service path identifier.

FIG. 7 is a schematic structural diagram of a first data packet routing apparatus according to an embodiment of the present invention. The apparatus is located in a value-added-service processing network, and includes:
a transceiver module 701, configured to receive a first data packet sent by a data packet processing apparatus in the value-added-service processing network; and
a processing module 702, configured to: obtain, from the first data packet, a service path identifier of a service path that the first data packet is to go through, and route the first data packet according to the service path identified by the obtained service path identifier, where
the service path includes each VAS type that is in the value-added-service processing network and that is sequentially included in the service chain that the first data packet is to go through, and a VAS instance that corresponds to each VAS type and that the first data packet is to go through.

FIG. 8 is a schematic structural diagram of a second data packet routing apparatus according to an embodiment of the present invention. The apparatus is located in a value-added-service processing network, and includes:
an I/O interface 801, configured to receive a first data packet sent by a data packet processing apparatus in the value-added-service processing network; and
a processor 802, configured to: obtain, from the first data packet, a service path identifier of a service path that the first data packet is to go through, and route the first data packet according to the service path identified by the obtained service path identifier, where
the service path includes each VAS type that is in the value-added-service processing network and that is sequentially included in the service chain that the first data packet is to go through, and a VAS instance that corresponds to each VAS type and that the first data packet is to go through.

FIG. 9 is a schematic structural diagram of a first classifier according to an embodiment of the present invention. The classifier is located in a value-added-service processing network, and includes:
a processing module 901, configured to determine service chain information of a service chain that is in the value-added-service processing network and that a first data packet is to go through; and
a sending module 902, configured to: place the service chain information in the first data packet, and send the first data packet to a data packet processing apparatus in the value-added-service processing network, to instruct the data packet processing apparatus to determine, according to the service chain information, the service chain that the first data packet is to go through.

FIG. 10 is a schematic structural diagram of a second classifier according to an embodiment of the present invention. The classifier is located in a value-added-service processing network, and includes:
a processor 1001, configured to determine service chain information of a service chain that is in the value-added-service processing network and that a first data packet is to go through; and
an I/O interface 1002, configured to: place the service chain information in the first data packet, and send the first data packet to a data packet processing apparatus in the value-added-service processing network, to instruct the data packet processing apparatus to determine, according to the service chain information, the service chain that the first data packet is to go through.

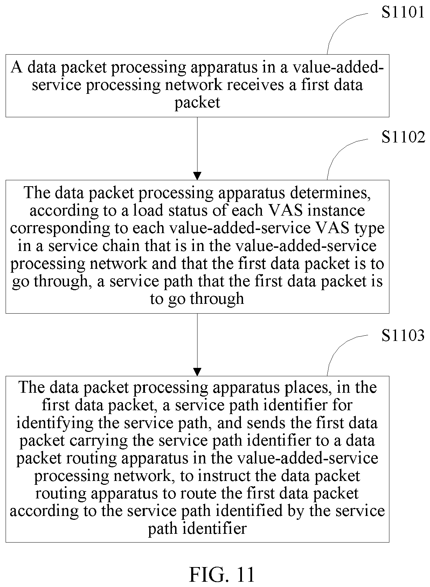

FIG. 11 is a flowchart of a data packet processing method according to an embodiment of the present invention. As shown in FIG. 11, the method includes the following steps:
S1101: A data packet processing apparatus in a value-added-service processing network receives a first data packet.

S1102: The data packet processing apparatus determines, according to a load status of each VAS instance corresponding to each value-added-service VAS type in a service chain that is in the value-added-service processing network and that the first data packet is to go through, a service path that the first data packet is to go through, where the service path includes each VAS type sequentially included in the service chain and a VAS instance that corresponds to each VAS type and that the first data packet is to go through.

S1103: The data packet processing apparatus places, in the first data packet, a service path identifier for identifying the service path, and sends the first data packet carrying the service path identifier to a data packet routing apparatus in the value-added-service processing network, to instruct the data packet routing apparatus to route the first data packet according to the service path identified by the service path identifier.

Optionally, the determining, by the data packet processing apparatus, a service path used for transmitting the first data packet in step S1102 includes:
determining, by the data packet processing apparatus, the service path according to the load status, and a status of each VAS instance corresponding to each VAS type in the service chain.

Optionally, the determining, by the data packet processing apparatus, a service path used for transmitting the first data packet in step S1102 includes:
determining, by the data packet processing apparatus, the service path according to the load status and a user identifier of a user to which the first data packet belongs and based on a rule that a same VAS instance is selected when data packets of a same service flow of a same user go through a same VAS type.

Optionally, the first data packet comes from a classifier in the value-added-service processing network, and the first data packet includes service chain information of the service chain that the first data packet is to go through; and
after the receiving, by a data packet processing apparatus, a first data packet in step S1101, and before the determining a service path that the first data packet is to go through, the method further includes: determining, by the data packet processing apparatus according to the service chain information obtained from the first data packet, the service chain that the first data packet is to go through.

Optionally, before the receiving, by a data packet processing apparatus, a first data packet in step S1101, the method further includes:
determining, by the classifier, the service chain information of the service chain that is in the value-added-service processing network and that the first data packet is to go through; and
placing, by the classifier, the service chain information in the first data packet, and sending the first data packet to the data packet processing apparatus, to instruct the data packet processing apparatus to determine, according to the service chain information, the service chain that the first data packet is to go through.

Optionally, the first data packet is the first packet of a service flow to which the first data packet belongs;
after the determining, by the data packet processing apparatus, a service path in step S1102, the method further includes: recording, by the data packet processing apparatus, a correspondence between a service flow identifier of the service flow to which the first data packet belongs and the service path identifier;
receiving, by the data packet processing apparatus, a second data packet, where the second data packet is a non-first packet of the service flow to which the first data packet belongs; and
placing, in the second data packet by the data packet processing apparatus, the service path identifier in the recorded correspondence, and sending the second data packet carrying the service path identifier to the data packet routing apparatus, to instruct the data packet routing apparatus to route the second data packet according to the service path identified by the service path identifier.

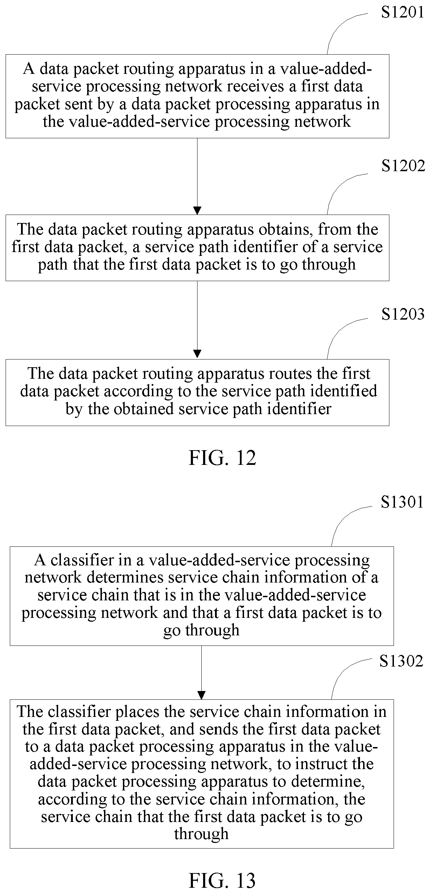

FIG. 12 is a flowchart of a data packet routing method according to an embodiment of the present invention. As shown in FIG. 12, the method includes the following steps:
S1201: A data packet routing apparatus in a value-added-service processing network receives a first data packet sent by a data packet processing apparatus in the value-added-service processing network.

S1202: The data packet routing apparatus obtains, from the first data packet, a service path identifier of a service path that the first data packet is to go through.

S1203: The data packet routing apparatus routes the first data packet according to the service path identified by the obtained service path identifier.

The service path includes each VAS type that is in the value-added-service processing network and that is sequentially included in the service chain that the first data packet is to go through, and a VAS instance that corresponds to each VAS type and that the first data packet is to go through.

FIG. 13 is a flowchart of an information sending method according to an embodiment of the present invention. As shown in FIG. 13, the process includes the following steps:
S1301: A classifier in a value-added-service processing network determines service chain information of a service chain that is in the value-added-service processing network and that a first data packet is to go through.

S1302: The classifier places the service chain information in the first data packet, and sends the first data packet to a data packet processing apparatus in the value-added-service processing network, to instruct the data packet processing apparatus to determine, according to the service chain information, the service chain that the first data packet is to go through.

In the embodiments of the present invention, the data packet processing apparatus in a value-added-service processing network determines, according to a load status of each VAS instance corresponding to each value-added-service VAS type in a service chain, a service path that a received first data packet is to go through, and sends a service path identifier for identifying the service path to the data packet routing apparatus in the value-added-service processing network, and the data packet routing apparatus routes the first data packet according to the service path. The service path is determined according to the load status of each VAS instance. Therefore, when the first data packet is routed, load on each VAS instance is considered, avoiding that load on devices in a same VAS type is uneven.

In addition, the data packet processing apparatus provided in the embodiments of the present invention places the identifier of the service path in the first data packet, and sends the first data packet to the data packet routing apparatus. This provides a method for passing on routing control information by using a data packet, and no dedicated control device is needed in the network to route a data packet.

In another aspect, in the embodiments of the present invention, the classifier in the value-added-service processing network determines service chain information of a service chain that is in the value-added-service processing network and that the first data packet is to go through, places the service chain information in the first data packet, and sends the first data packet to the data packet processing apparatus. In this way, the data packet processing apparatus may obtain the service chain information from the first data packet, determine, according to the service chain information, the service chain that the first data packet is to go through, and then further determine, according to the load status of each VAS instance corresponding to each VAS type in the service chain, the service path that the first data packet is to go through. In this way, it is avoided that load on devices in a same VAS type is uneven.

A person skilled in the art should understand that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, a CD-ROM, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams. These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the scope of the present invention. The present invention is intended to cover these modifications and variations provided that they fall within the scope of protection defined by the following claims and their equivalent technologies.

## Claims

1. A data packet processing apparatus, wherein the data packet processing apparatus is located in a value-added-service processing network, and comprises:
a transceiver module, configured to receive a first data packet; and
a processing module, configured to determine, according to a load status of each VAS instance corresponding to each value-added-service, VAS, type in a service chain that is in the value-added-service processing network and that the first data packet is to go through, a service path that the first data packet is to go through, wherein the service path comprises each VAS type sequentially comprised in the service chain and a VAS instance that corresponds to each VAS type and that the first data packet is to go through, wherein
the transceiver module is further configured to: place, in the first data packet, a service path identifier for identifying the service path, and send the first data packet carrying the service path identifier to a data packet routing apparatus in the value-added-service processing network, to instruct the data packet routing apparatus to route the first data packet according to the service path identified by the service path identifier.

2. The data packet processing apparatus according to claim 1, wherein the processing module is specifically configured to:
determine the service path according to the load status, and a status of each VAS instance corresponding to each VAS type in the service chain.

3. The data packet processing apparatus according to claim 1, wherein the processing module is specifically configured to:
determine the service path according to the load status and a user identifier of a user to which the first data packet belongs and based on a rule that a same VAS instance is selected when data packets of a same service flow of a same user go through a same VAS type.

4. The data packet processing apparatus according to claim 1, wherein the first data packet comes from a classifier in the value-added-service processing network, and the first data packet comprises service chain information of the service chain that the first data packet is to go through; and
the processing module is further configured to determine, according to the service chain information obtained from the first data packet, the service chain that the first data packet is to go through.

5. The data packet processing apparatus according to any one of claims 1 to 4, wherein the first data packet is the first packet of a service flow to which the first data packet belongs;
the processing module is further configured to: after determining the service path, record a correspondence between a service flow identifier of the service flow to which the first data packet belongs and the service path identifier; and
the transceiver module is further configured to:
after the processing module determines the service path, receive a second data packet, wherein the second data packet is a non-first packet of the service flow to which the first data packet belongs; and
place, in the second data packet, the service path identifier in the recorded correspondence, and send the second data packet carrying the service path identifier to the data packet routing apparatus, to instruct the data packet routing apparatus to route the second data packet according to the service path identified by the service path identifier.

6. A data packet routing apparatus, wherein the data packet routing apparatus is located in a value-added-service processing network, and comprises:
a transceiver module, configured to receive a first data packet sent by a data packet processing apparatus in the value-added-service processing network; and
a processing module, configured to: obtain, from the first data packet, a service path identifier of a service path that the first data packet is to go through, and route the first data packet according to the service path identified by the obtained service path identifier, wherein
the service path comprises each VAS type that is in the value-added-service processing network and that is sequentially comprised in the service chain that the first data packet is to go through, and a VAS instance that corresponds to each VAS type and that the first data packet is to go through.

7. A classifier, wherein the classifier is located in a value-added-service processing network, and comprises:
a processing module, configured to determine service chain information of a service chain that is in the value-added-service processing network and that a first data packet is to go through; and
a sending module, configured to: place the service chain information in the first data packet, and send the first data packet to a data packet processing apparatus in the value-added-service processing network, to instruct the data packet processing apparatus to determine, according to the service chain information, the service chain that the first data packet is to go through.

8. A data packet processing method, comprising:
receiving, by a data packet processing apparatus in a value-added-service processing network, a first data packet;
determining, by the data packet processing apparatus according to a load status of each VAS instance corresponding to each value-added-service VAS type in a service chain that is in the value-added-service processing network and that the first data packet is to go through, a service path that the first data packet is to go through, wherein the service path comprises each VAS type sequentially comprised in the service chain and a VAS instance that corresponds to each VAS type and that the first data packet is to go through; and
placing, in the first data packet by the data packet processing apparatus, a service path identifier for identifying the service path, and sending the first data packet carrying the service path identifier to a data packet routing apparatus in the value-added-service processing network, to instruct the data packet routing apparatus to route the first data packet according to the service path identified by the service path identifier.

9. The method according to claim 8, wherein the determining, by the data packet processing apparatus, a service path used for transmitting the first data packet comprises:
determining, by the data packet processing apparatus, the service path according to the load status, and a status of each VAS instance corresponding to each VAS type in the service chain.

10. The method according to claim 8, wherein the determining, by the data packet processing apparatus, a service path used for transmitting the first data packet comprises:
determining, by the data packet processing apparatus, the service path according to the load status and a user identifier of a user to which the first data packet belongs and based on a rule that a same VAS instance is selected when data packets of a same service flow of a same user go through a same VAS type.

11. The method according to claim 8, wherein the first data packet comes from a classifier in the value-added-service processing network, and the first data packet comprises service chain information of the service chain that the first data packet is to go through; and
after the receiving, by a data packet processing apparatus, a first data packet, and before the determining a service path that the first data packet is to go through, the method further comprises: determining, by the data packet processing apparatus according to the service chain information obtained from the first data packet, the service chain that the first data packet is to go through.

12. The method according to claim 11, wherein before the receiving, by a data packet processing apparatus, a first data packet, the method further comprises:
determining, by the classifier, the service chain information of the service chain that is in the value-added-service processing network and that the first data packet is to go through; and
placing, by the classifier, the service chain information in the first data packet, and sending the first data packet to the data packet processing apparatus, to instruct the data packet processing apparatus to determine, according to the service chain information, the service chain that the first data packet is to go through.

13. The method according to any one of claims 8 to 12, wherein the first data packet is the first packet of a service flow to which the first data packet belongs; and
after the determining, by the data packet processing apparatus, a service path, the method further comprises: recording, by the data packet processing apparatus, a correspondence between a service flow identifier of the service flow to which the first data packet belongs and the service path identifier;
receiving, by the data packet processing apparatus, a second data packet, wherein the second data packet is a non-first packet of the service flow to which the first data packet belongs; and
placing, in the second data packet by the data packet processing apparatus, the service path identifier in the recorded correspondence, and sending the second data packet carrying the service path identifier to the data packet routing apparatus, to instruct the data packet routing apparatus to route the second data packet according to the service path identified by the service path identifier.

14. A data packet routing method, comprising:
receiving, by a data packet routing apparatus in a value-added-service processing network, a first data packet sent by a data packet processing apparatus in the value-added-service processing network;
obtaining, by the data packet routing apparatus from the first data packet, a service path identifier of a service path that the first data packet is to go through; and
routing, by the data packet routing apparatus, the first data packet according to the service path identified by the obtained service path identifier, wherein
the service path comprises each VAS type sequentially comprised in a service chain that is in the value-added-service processing network and that the first data packet is to go through, and a VAS instance that corresponds to each VAS type and that the first data packet is to go through.

15. An information sending method, comprising:
determining, by a classifier in a value-added-service processing network, service chain information of a service chain that is in the value-added-service processing network and that a first data packet is to go through; and
placing, by the classifier, the service chain information in the first data packet, and sending the first data packet to a data packet processing apparatus in the value-added-service processing network, to instruct the data packet processing apparatus to determine, according to the service chain information, the service chain that the first data packet is to go through.
